# EUROPEAN PATENT APPLICATION

(11) **EP 3 037 774 A1**
(43) Date of publication of application: **29.06.2016**
(21) Application number: 14199799.9
(22) Date of filing: 22.12.2014
(51) Int. Cl.: G01B 1/00, G01B 3/18, G01B 5/12

(54) **Micrometer equipped with an extendable main body**

(71) Applicant: Aktiebolaget SKF, 415 50 Göteborg (SE)
(72) Inventor: Jallet, Frédéric, 89420 Trévilly (FR)

(57) **Abstract**

A micrometer (1) comprises a main body (2) including a base rod (5) and at least one extension rod (6, 7), an adjusting sleeve (3) movably mounted on a first end (8) of the main body (2), a tip (4) mounted on a second end (13) of the main body (2), said second end (13) being opposite the first end (8).

At least one of the base rod (5) and said extension rod (6, 7) is made of a composite material.

## Description

The present invention belongs to micrometers, more particularly for micrometers suitable for measuring the diameter of a bore, said diameter being of the order of the meter.

In order to measure precisely the diameter of a bore, a micrometer can be used. Such a micrometer includes a rod-shaped main body, which comprises two opposite ends, an adjusting sleeve movably mounted on the first end of the main body and a tip mounted on the second end of the main body.

A mechanical linkage, involving a micrometric screw, links the main body and the adjusting sleeve.

It is possible to rotate the adjusting sleeve such that the length of the micrometer is slightly below the diameter of a bore, in such a way that the micrometer can be arranged inside the bore. By rotating the adjusting sleeve, the length of the micrometer can be increased until it equals exactly the diameter of the bore. In this case, the two ends of the micrometer touch the wall of the bore, such that the length of the micrometer cannot be increased anymore. Easily, the length of the micrometer at this time can be read on a vernier provided on the adjusting sleeve, or on a digital display. Therefore, such a micrometer allows to measure the diameter of a bore which can be about one meter large, with an accuracy of the order of the micron.

To allow an accurate measure, it is necessary that the rotation of the adjusting sleeve results in only a small length variation. As a consequence, such a micrometer can be used to measure the diameter of different bores on condition that the diameters of those bores are relatively close.

Therefore, a drawback of such a micrometer is that it is impossible to use it for measuring very different diameters, such as measuring a one-meter-long diameter and a four-meter-long diameter, successively with the same micrometer.

To solve this problem, it is known to add extension rods to the main body. To do so, the tip can be disassembled from the main body, and an extension rod, comparable to the rod-shaped main body, can be added.

It allows to use such a micrometer for measuring precisely the diameter of a bore, which is about one meter large, and then to use the same micrometer to measure the diameter of another bore, which is four meters large. To do so, a three-meter-long extension rod or three one-meter-long extension rods may have been added to the main body.

However, a drawback of such an arrangement is the loss of accuracy generated by the use of extension rods. Indeed, the temperature variations may result in a thermal expansion of the micrometer, which has to be taken into account to measure precisely the diameter of a bore. Therefore, the more extension rods that makes up the main body, the more the accuracy is degraded. Since some of the rods being parts of the main body may not have the same dimensions, and are even sometimes not made of the same material, it is much harder to estimate the thermal expansion than when the micrometer only includes one base rod. It is therefore much harder to take the thermal expansion into account in the calculation of the diameter.

Moreover, since the extension rods and the main body are usually made of steel, the weight of the micrometer increases, such that it is harder to have it manipulated by only one person. It further may appear a phenomenon of flexion, or torsion, which can result in another loss of accuracy.

Therefore, it is an object of the invention to provide a micrometer, that can be used to measure the diameter of very different bores, which does not involve a loss of accuracy, or less than the prior art.

For this purpose, a micrometer comprises a main body including a base rod and at least one extension rod, an adjusting sleeve movably mounted on a first end of the main body, a tip mounted on a second end of the main body, said second end being opposite to the first end. Moreover, at least one of the base rod and said extension rod is made of a composite material.

Thanks to those features, the thermal expansion due to the temperature variation is decreased. This results in limiting the loss of accuracy when extension rods are added.

In one embodiment, the thermal expansion coefficient of at least one of the base rod and said extension rod is ranged from 0,5 µm/°C/m to 0,6 µm/°C/m.

According to another embodiment, the density of at least one of the base rod and said extension rod is ranged from 1,5 g/cm³ to 3 g/cm³, and preferably from 1,6 g/cm³ to 1,8 g/cm³.

In a special embodiment, the base rod and said extension rod are made of a composite material.

The composite material can be made of an epoxy resin and include a stiffening material, at a volume fraction ranged from 60% to 70%.

In such an embodiment, the stiffening material can include carbon fibers. Alternatively or in combination, the stiffening material can include glass fibers and/or basalt fibers.

In any of those alternatives, the fibers can be helically woven.

According to another embodiment, one end of the base rod may include a threaded bore, the tip comprising a threaded cylinder, suitable such that it can be screwed into the threaded bore of the base rod, said extension rod being equipped at one of its ends with a threaded bore being substantially the same as the threaded bore of the base rod, and at the other of its ends with a threaded cylinder being substantially the same as the threaded cylinder of the tip.

Such an embodiment allows to assemble and disassemble easily the base rod and the extension rods, in order to modify the length of the main body.

In a specific embodiment, the micrometer further includes a digital display.

The micrometer can also include a data output.

In a specific embodiment, the main body includes two extension rods.

At least one of the main body and the adjusting sleeve may include a vernier.

According to another aspect of the invention, it is proposed a method for controlling the dimensions of an object by means of a micrometer such as the above described micrometer.

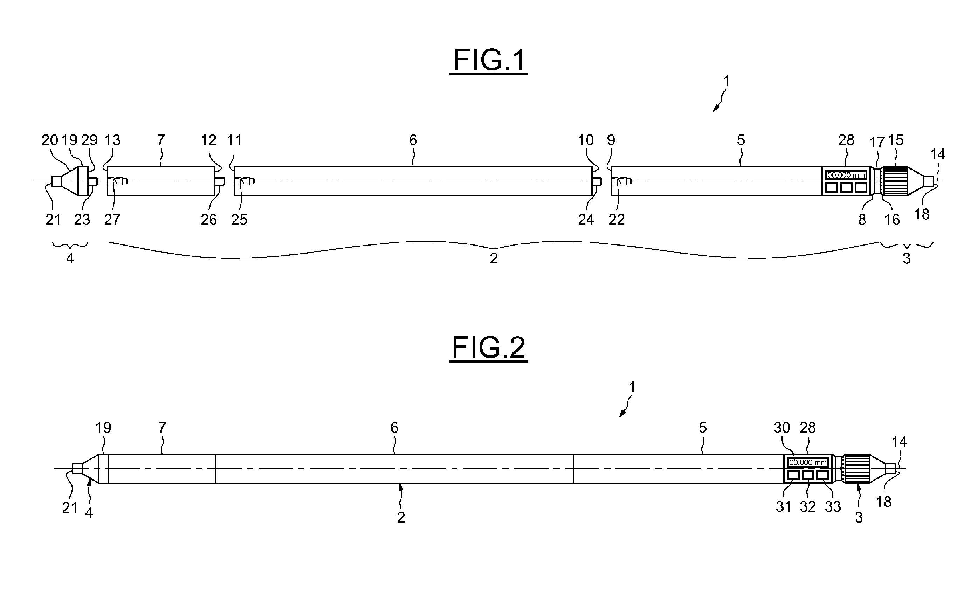

Referring to figures 1 and 2, a micrometer 1 is provided for measuring the diameter of a bore. Accordingly, the micrometer 1 includes a main body 2, an adjusting sleeve 3 and a tip 4.

In this embodiment, the main body 2 consists of a base rod 5, a first extension rod 6 and a second extension rod 7. According to figure 1 only, the base rod 5 includes a first end 8 and a second opposite end 9. Similarly, the first extension rod 6 includes a first end 10 and a second opposite end 11. Similarly, the second extension rod 7 includes a first end 12 and a second opposite end 13. The base rod 5 and the extension rods 6 and 7 are provided for being arranged in line, as it is represented on figure 2. Therefore, the main body 2 is rod-shaped, and it has two opposite ends 8 and 13. The main body 2 further includes an axis of symmetry 14.

The adjusting sleeve 3 is movably mounted on the first end 8 of the main body 2. More precisely, the adjusting sleeve 3 is able to rotate about, and to translate along the axis of symmetry 14, relative to the main body 2. The mechanical linkage between the main body 2 and the adjusting sleeve 3 is provided by a micrometric screw which is not represented on figures 1 and 2. In this embodiment, the micrometric screw is secured to the main body 2. The adjusting sleeve 3 includes a central bore, being hidden on figures 1 and 2. The central bore is threaded such that it can cooperate with the micrometric screw. Accordingly, it is provided a helical link between the main body 2 and the adjusting sleeve 3. The helical link is about the axis 10, and with uniform pitch, included between 0,5 mm and 2 mm. The adjusting sleeve 3 includes a handling part 15. On the left of the handling part 15 (relative to figures 1 and 2), the adjusting sleeve 3 comprises a tapered part 16. A smaller part 17 is secured to the main body 2, on the right (relative to figures 1 and 2) of the end 8. The smaller part 17 is movably mounted inside the tapered part 16. The tapered part 16 and the smaller part 17 may include a vernier, consisting of graduations allowing to measure the movement of the adjusting sleeve 3 relative to the main body 2. The adjusting sleeve 3 also comprises a contact point 18, located at the end opposite the vernier. The tapered part 17 is located on the side axially opposite the contact point 18, relative to the handling part 15.

The tip 4 includes a cylindrical part 19, a tapered part 20, a contact point 21 and an end 29 consisting of a circular surface.

Referring to figure 1 only, a threaded bore 22 is formed in the base rod 5, in its end 9. The threaded bore 22 is cylindrical and centered about the axis 14. Accordingly, the cylindrical bore 22 is not visible on the front view of figure 1. It has been however schematically represented on figure 1, in dashed lines. The threaded cylinder 18 is threaded, with a pitch p, advantageously between 0,5 mm and 2 mm.

The tapered tip 4 includes a threaded cylinder 23 which projects axially outwards from the surface 29. The threaded cylinder 23 is substantially cylindrical, about the axis 14. Moreover, the diameter of the threaded cylinder 23 is substantially equal to, or slightly lower than the diameter of the treaded bore 22. In addition, the cylinder 23 is threaded, with a pitch substantially equal to the pitch p of the threaded cylinder 22. Accordingly, the threaded cylinder 23 is able to cooperate with the threaded bore 22, such that the tip 4 can be assembled with the base rod 5, the end 29 being in contact with the end 9.

The first extension rod 6 has a threaded cylinder 24 which projects axially outwards from the first end 10. The threaded cylinder 24 is substantially identical to the threaded cylinder 23 of the tip 4. Similarly, the second extension rod 7 has a threaded cylinder 26 on its first end 12 substantially identical to the threaded cylinder 23. Since they are substantially identical, the threaded cylinders 23, 24 and 26 have substantially the same lengths and the same pitch p. Accordingly, it allows the threaded cylinder 24 to cooperate with the threaded bore 22, such that the first extension rod 6 and the base rod 5 are secured to each others, their respective ends 10 and 9 being in contact. Similarly, the second extension rod 7 can be secured to the base rod 5, their respective ends 12 and 9 being in contact.

Still referring to figure 1, the first extension rod 6 includes a threaded bore 25, formed in the end 11. The threaded bore 25 is substantially identical to the threaded bore 22 of the base rod 5. As a consequence, the threaded bore 25 has substantially the same length and is threaded substantially with the same pitch p as the threaded bore 22 of the base rod 5. Similarly, a threaded bore 27 is formed in the second end 13 of the second extension rod 7, and is substantially identical to the threaded bore 22 of the base rod 5.

As a consequence, the threaded bores 22, 25 and 27 can each cooperate with any of the threaded cylinders 23, 24 and 26.

Thanks to those features, it is possible to assemble or disassemble the base rod 5, the extension rods 6 and 7 and the tip 4. Accordingly, it is possible to make different combinations with the base rod 5, the extension rod 6 and 7 and the tip 4.

In this embodiment, the micrometric screw adapted such that the adjusting sleeve 3 is movable by a 30 mm movement.

In this embodiment, the lengths between the contact point 14 and the end 9 equal 950 mm, when the adjusting sleeve is moved at its closest position to the main body 2. The first extension rod 6 is one meter long. The second extension rod 7 is 30 cm long. The tip 4 is 50 mm long.

A first combination is to assemble the tip 4 directly on the base rod 5. According to this combination, the extension rods 6 and 7 are not used. In order to obtain such a combination, it is only necessary to screw the cylinder 23 in the bore 22. This combination can be used for measuring diameter between 1000 mm and 1030 mm.

A second combination consists in using only the second extension rod 7. According to this combination, the threaded cylinder 26 is screwed in the threaded bore 22, such that the surface 12 is in contact with the surface 9. Moreover, the cylinder 23 of the tip 4 is screwed in the threaded bore 27. In this combination, the first extension rod 6 is not used. This combination can be used for measuring diameters between 1300 mm and 1330 mm.

A third combination consists in using only the first extension rod 7. According to this combination, the threaded cylinder 24 is screwed in the threaded bore 22, such that the surface 10 is in contact with the surface 9. Moreover, the cylinder 23 of the tip 4 is screwed in the threaded bore 25. In this combination, the second extension rod 7 is not used. This combination can be used for measuring diameters between 2000 mm and 2030 mm.

A fourth combination, shown on figure 2, consists in using bore extension rods 6 and 7. According to this combination, the threaded cylinder 24 is screwed in the threaded bore 22, the threaded cylinder 26 is screwed in the threaded bore 25 and the threaded cylinder 23 of the tip 4 is screwed in the threaded bore 27. In this combination, all the components represented on figure 1 are used. This combination can be used for measuring diameters between 2300 mm and 2330 mm.

In this embodiment, both the base rod 5 and the extension rods 6 and 7 are made of a composite material. For each of the rods 5, 6 and 7, the composite material includes an epoxy resin and a stiffening material. The stiffening material includes glass fibbers, carbon fibbers and basalt fibbers. The volume fraction is substantially the same of each type of fibers. Those different fibbers are helically woven.

The total volume fraction of stiffening material in the composite material is chosen such that the thermal expansion coefficient of the rods 5, 6 and 7 is ranged from 0,5 µm/°C/m and 0,6 µm/°C/m. In another embodiment, the volume fraction can be determined such that the density of the rods 5, 6 and 7 is ranged from 0,3 µm/°C/m to 0,7 µm/°C/m.

In this embodiment, the volume fraction of stiffening material is ranged from 60% to 70%.

The micrometer further includes a digital display 28. The digital display 28 includes a digital screen 30 a preset button 31, a hold button 32 and a data button 33. The digital screen 30 displays the movement of the adjusting sleeve 3 relative to the main body 2. To do so, the digital screen 30 is able to display a number including five digits. The number displayed reflects the position of the adjusting sleeve 3 in µm relative to an origin, being a point to be determined of the main body 2.

The preset button 31 is provided for calibrating the micrometer. When a pressure is applied on the button 31, the distance displayed on digital screen 30 equals 0 micrometer.

The hold button 32 is provided for holding the distance displayed on the digital screen 30. When a pressure is applied on the button 32, the value which is displayed on the screen 30 is maintained unchanged, even if the distance between the adjusting sleeve 3 and the main body 2 is being changed.

The data button 33 concerns the data output (not shown on figures 1 and 2) which can be provided on the main body 2. A connector, for example a wire connected to a computer, can be connected to the main body 2 in order to collect the data displayed by the screen 30.

Therefore, it is possible, by means of such a micrometer, to measure the diameter of very different bores.

For instance, a method for controlling the diameter of a bore is described later. Such a method is implemented by means of the micrometer of figure 1. To describe the method, an example will be used. In this example, a diameter to be measured is 2315 mm long.

The method includes a first step aiming to preset the micrometer. In this first step, the rotating sleeve 3 is rotated, until it comes into abutment, at its position closest to the main body 2. Then a pressure is applied on the preset button 31. Accordingly, the value 0,000 mm is displayed on the screen 30.

The method includes a second step of making an adapted combination of rods. In this step, extension rods 6 or 7 are assembled or disassembled with the main body 2 of the micrometer 1, such that the length between the contact points 18 and 21 is slightly below the diameter to be measured. In this example, it is visually detectable that the extension rods 6 and 7 are needed to be parts of the main body 2. Indeed, the length of such a combination can vary between 2300 and 2330 mm, which is adapted to measure the 2315mm long diameter. At the end of the second step, the micrometer is 2300 mm long.

The method includes a third step of extension of the micrometer. In this step, the rotated sleeve 3 is rotated in order to extend the length between the contact point 18 and 21. The micrometer cannot be extended when the length between the contact points 18 and 21 equals the diameter of the bore. In this case both contact points 18 and 21 are in contact with the wall of the bore. At this time, the digital screen 30 displays a value which reflects the distance between the adjusting sleeve 3 and its position at the end of the first step. In this example, is may be assumed that the displayed value is 15,043 mm.

The method includes a fourth step of calculation of the diameter. In this step, the diameter of the bore is deduced from the length displayed on the screen 30 and from the length of the micrometer at the end of the second step. In this example, the length of the micrometer at the end of second step was 2300 mm. the length displayed on the screen 30 is 15,043 mm. Accordingly, the diameter to be measured equals 2300,053 mm.

In order to measure different diameters, for instance a diameter which is about 2400 mm long, other extension rods can be added. In particular, 100 mm long extension rod and 30 mm long extension rod, having the same feature than the extension rods 6 or 7 with exception of their lengths can be used. To measure a 2400 mm long diameter, a 100 mm long extension rod or three 30 mm long extension rods are required, in addition to the extension rods 6 and 7.

The use of a micrometer according to the invention is therefore advantageous, in that the thermal expansion of the micrometer is reduced. It can indeed be divided by 20, in comparison to a classic micrometer equipped with rods made of steel. As a result, the measurement uncertainty is considerably decreased. Another advantage is the reduction of the weight of the micrometer. The use of rods made of a composite material is also advantages, in that it increases the flexural and the torsional strengths of the micrometer.

In another embodiment of the invention, only the extension rods 6 and 7 can be made of a composite material, the base rod 5 being made of another material such as steel. Alternatively, the base rod 5 can be made of a composite material, the extension rods 6 and 7 being made of steel. In another alternative embodiment, only one of the extension rods 6 and 7 can be made of a composite material, the other extension rod 6 or 7 being made of steel. In such an embodiment, the base rod 5 can be made of a composite material or made of steel.

In those embodiments, the accuracy of the micrometer is improved compared to micrometers of the prior art such as those described in the introductive part. However, the accuracy is not as improved as it is with the embodiment represented on figure 2, where each of the base rod 5 and the extension rods 6 and 7 are made of a composite material.

Accordingly, the invention allows to provide the measurement of the diameter of a bore, requiring no more than one operator, and being regardless of the temperature. It is also possible to provide accurate measures on bores having different diameters, by means of only one micrometer.

As a consequence, such a micrometer is more polyvalent than the prior art, easier to use and more accurate.

## Claims

1. Micrometer (1) comprising a main body (2) including a base rod (5) and at least one extension rod (6, 7), an adjusting sleeve (3) movably mounted on a first end (8) of the main body (2), a tip (4) mounted on a second end (13) of the main body (2), said second end (13) being opposite the first end (8), **characterized in that** at least one of the base rod (5) and said extension rod (6, 7) is made of a composite material.

2. Micrometer (1) according to Claim 1, in which the thermal expansion coefficient of at least one of the base rod (5) and said extension rod (6, 7) is ranged from 0,5 µm/°C/m to 0,6 µm/°C/m.

3. Micrometer (1) according to Claim 1 or 2, in which the density of at least one of the base rod (5) and said extension rod (6, 7) is ranged from 1,6 g/cm³ to 1,8 g/cm³.

4. Micrometer (1) according to any of the preceding Claims, in which both the base rod (5) and said extension rod (6, 7) are made of a composite material.

5. Micrometer (1) according to any of the preceding Claims, in which the composite material is made of an epoxy resin and includes a stiffening material, at a volume fraction ranged from 60% to 70%.

6. Micrometer (1) according to Claim 5, in which the stiffening material includes carbon fibers.

7. Micrometer (1) according to Claim 5 or 6, in which the stiffening material includes glass fibers.

8. Micrometer (1) according to any of the Claims 5 to 7, in which the stiffening material includes basalt fibers.

9. Micrometer (1) according to any of the Claims 6 to 8, in which the fibers are helically woven.

10. Micrometer (1) according to any of the preceding Claims, in which one end (9) of the base rod (5) includes a threaded bore (22), the tip (4) comprising a threaded cylinder (23), suitable such that it can be screwed into the threaded bore (22) of the base rod (5), said extension rod (6, 7) being equipped at one of its ends (11, 13) with a threaded bore (25, 27) being substantially the same as the threaded bore (22) of the base rod (5), and at the other of its ends (10, 12) with a threaded cylinder (24, 26) being substantially the same as the threaded cylinder (23) of the tip (4).

11. Micrometer (1) according to any of the preceding Claims, further including a digital display (28).

12. Micrometer (1) according to any of the preceding Claims, further including a data output.

13. Micrometer (1) according to any of the preceding Claims, wherein the main body (2) includes two extension rods (6, 7).

14. Micrometer (1) according to any of the preceding Claims, wherein at least one of the main body (2) and the adjusting sleeve (3) includes a vernier.

15. Method for controlling the dimensions of an object by means of a micrometer according to any of the Claims 1 to 14.
